Europäisches Patentamt

European Patent Office

Office européen des brevets

(11) Publication number: **0 188 907**
A2

# (12) EUROPEAN PATENT APPLICATION

(21) Application number: 85309358.1

(22) Date of filing: 20.12.85

(51) Int. Cl.⁴: **B 65 D 1/34**, C 08 L 25/02, C 08 J 9/14 // (C08L25/02, 23:04)

(30) Priority: 24.12.84 US 685587

(43) Date of publication of application: 30.07.86 Bulletin 86/31

(84) Designated Contracting States: BE DE FR GB IT NL

(71) Applicant: MOBIL OIL CORPORATION, 150 East 42nd Street, New York New York 10017 (US)

(72) Inventor: Gunesin, Binnur Zeynup, 27 Old Stirling Road, Warren New Jersey 07060 (US)
Inventor: Trivedi, Viren Pradyumna, 32 Arvin Road, Old Bridge New Jersey 08857 (US)

(74) Representative: West, Alan Harry, Mobil Court 3 Clements Inn, London WC2A 2EB (GB)

(54) Containers made from polystyrene foams containin polyethylene.

(57) The impact strength of containers made from foams of aromatic olefins such as polystyrene and poly-(para-methyl-styrene) is improved by the addition of a small amount e.g., 2 to 25 weight percent of a polyethylene such as linear low density polyethylene. Meat trays made of such foams can be processed in automatic packaging equipment and exhibit reduced damage, such as cracking, in processing.

## CONTAINERS MADE FROM POLYSTYRENE FOAMS
## CONTAINING POLYETHYLENE

Foamed polystyrene trays are widely used in the packaging of edible products, such as meat, cheese and fruit. Typically, such trays are packaged on automatic equipment by wrapping the tray with a clear film. A persistent problem with such trays is cracking during the wrapping operation or afterwards, particularly in the corners of the tray. This necessitates using heavier gauge foam, an additional expense, or the use of special designs, such as disclosed in U.S. Patent 4,058,247. In accordance with this invention, the cracking problem in such foamed trays is alleviated by using a polyethylene additive in the polystyrene foam.

Polystyrene foams containing low density polyethylene, especially suitable for formation of blow molded articles are described in U.S. Patent 3,520,834. Foams of poly(para-methylstyrene) containing polyethylene homopolymers or copolymers are described in U.S. Patent 4,255,532. The purpose of the polyethylene in U.S. Patent 4,255,531 is to enhance cross-linking when the composition is irradiated. It is not intended that the compositions of this invention be irradiated and they need not be so treated to be entirely effective for the purpose intended herein.

In accordance with the present invention, foamed plastic trays of rectangular shape adapted for packaging of edible products by overwrapping with a plastic film on automatic equipment comprising foamed polystyrene or foamed poly(para-methylstyrene) are improved by adding a small amount of a low density polyethylene homopolymer or copolymer. The added polyethylene reduces cracking of the tray during and after overwrapping.

The improved compositions of this invention are suitable for use in a variety of known trays for the packaging of foods in which the tray is overwrapped in an automatic packaging machine. Polystyrene foam is the material of choice for this purpose. However, polymers with similar properties such as poly(para-methylstyrene) can also be used.

Poly(para-methylstyrene) polymers are described in U.S. Patent 4,176,144. Such polymers exhibit certain advantages over polystyrene in many applications but are not widely commercially available at this time. Therefore, polystyrene remains the material of choice for the commercial application of this invention.

The polyethylene polymer which is added to achieve the reduced cracking of the trays of this invention can be a low density polyethylene (LDPE) prepared by the high pressure process or a low density copolymer of ethylene and a higher olefin. Both high pressure resins and linear low density polyethylene (LLDPE) resins are commercially available.

Suitable LLDPE resins are described in U.S. Patent 4,076,698. These LLDPE resins are generally copolymers of ethylene and higher olefins having 4 to 8 carbon atoms. Ethylene copolymers with 1-butene, 1-hexene and 1-octene are advantageously used. The low density ethylene polymer is used in amounts sufficient to achieve its desired effect of reducing cracking. Generally, this amount is in the range of 2 to 25 weight percent and preferably 2 to 10 weight percent. Amounts of linear low density polyethylene in the range of 4 to 6 percent have been found to be suitable in practical tests in which meat trays have been made and tested on automatic wrapping equipment. Equipment of this type is widely used particularly in supermarkets. Manufacturers include Weldatron and Hobart.

The foams of this invention can be formed into trays by any suitable method. A typical commercial method involves the formation of a foam sheet by extrusion of the polymer mixture with a blowing agent such as isopentane and the subsequent thermal formation of the foam sheet into a container of the desired configuration. Generally, the foamed sheet is 90 to 100 mil in thickness, and its thickness increase during thermoformation to 150 to 170 mils. The foams of this invention also exhibit improved environmental stress crack resistance which is an advantage for trays which are used for packaging oily or fatty foods.

The use of the compositions of this invention offers the propsect of reducing the thickness of the foam typically used for polystyrene while reducing the cracking problem, thereby saving plastic material.

The invention is illustrated by the following non-limiting examples.

### EXAMPLES 1-3

Polystyrene resin was compounded with various amounts of linear low density polyethylene (LLDPE) in a 25 lb. size Banbury mixer. The polystyrene (PS1800) was a 1.7 melt index (M.I.) high heat grade crystal resin. The LLDPE was copolymer of ethylene and butene (Melt Index (E) = 1). The blends were injection molded to ASTM test specimens. The physical properties were as follows.

| EXAMPLE | C | 1 | 2 | 3 |
|---|---|---|---|---|
| PS/LLDPE Ratio | 100% | 95/5 | 85/15 | 75/25 |
| (G) g/10 min. | 1.7 | 2.6 | 2.8 | 3.0 |
| Vicat. °C | 108 | 108 | 108 | 108 |
| 1200 Impact (0.635 cm, 1/4 inch) | | | | |
| Ft.lb/inch | 0.17 | 0.22 | 0.24 | 0.39 |

EXAMPLE 4

A blend of 95 weight percent polystyrene (PS) and 5 weight percent LLDPE as in Example 1 above was foamed on a 6.35 to 8.89 cm (2.5-3.5 inch) Tandem pilot line with isopentane as a blowing agent. The foam sheet (about 100 mil thick), and meat trays thermoformed from the sheet (with a bottom gauge of about 165 mil) were compared against the polystyrene control for tensil and flexural properties, and trays were subjected to end use tests. The blend sheet exhibited an ultimate toughness in the machine direction 12-13% higher than the control (6.2 vs. 5.5 in-lb). The flexural properties of the thermoformed sheet of the blend is about 6% higher than the control (144 vs. 136 psi).

The end use as a meat tray was tested on a Weldotron automatic packaging machine by wrapping the tray containing simulated product with a plastic film in the conventional manner. For twenty samples the trays made from the blend gave 95% acceptable and 5% marginal performance. The control trays gave 60% acceptable and 40% unacceptable performance due to cracking, particularly at the corners.

WE CLAIM:

1. A tray of substantially rectangular shape adapted for packaging of an edible product by overwrapping with a plastic film on automated equipment comprising a foamed polymer mixture of polystyrene or poly(para-methylstyrene) containing an amount of low density polyethylene homopolymer or copolymer sufficient to reduce cracking of the tray during and after overwrapping.

2. The tray of Claim 1 in which said polymer mixture comprises polystyrene and a linear low density copolymer of ethylene and a higher olefin having 4 to 8 carbon atoms.

3. The tray of Claim 1 in which said polymer mixture comprises poly(para-methylstyrene) and a linear low density copolymer of ethylene and a higher olefin having 4 to 8 carbon atoms.

4. The tray of Claim 1 in which said polymer mixture comprises polystyrene and a low density polyethylene.

5. The tray of Claim 1 in which said polymer mixture comprises poly(para-methylstyrene) and a low density polyethylene.

6. The tray of Claim 1 in which said low density polyethylene polymer comprises 2 to 25 weight percent of said mixture.

7. The tray of Claim 1 in which said low

6

density polyethylene polymer comprises 2 to 10 weight percent of said mixture.

8.    The tray of Claim 1 which is thermoformed from an extruded foam sheet having a thickness of 90 to 100 mil.